# EUROPÄISCHE PATENTSCHRIFT

(11) **EP 1 525 918 B1**
(45) Veröffentlichungstag und Bekanntmachung des Hinweises auf die Patenterteilung: **13.04.2011**
(21) Anmeldenummer: 04022137.6
(22) Anmeldetag: 17.09.2004
(51) Int. Cl.: B01L 3/00

(54) **Experimentiervorrichtung**
Experimenting device
Dispositif d'expérimenter

(30) Priorität: 23.10.2003 DE 10349513
(43) Veröffentlichungstag der Anmeldung: 27.04.2005
(73) Patentinhaber: EADS Astrium GmbH, 81663 München (DE)
(72) Erfinder: Kern, Peter, Dr., 88682 Salem (DE); Kübler, Ulrich, 88677 Markdorf (DE)
(74) Vertreter: Meel, Thomas

(56) Entgegenhaltungen:
- WO-A-2004/071660
- DE-A1- 10 149 684
- US-A- 5 888 826

## Beschreibung

Die Erfindung betrifft eine Vorrichtung zur Durchführung von Experimenten gemäß dem Oberbegriff des Patentanspruchs 1.

In vielen Gebieten der Wissenschaft, z.B. Biologie, Biotechnologie oder Chemie werden Experimentiervorrichtungen verwendet, bei denen ein oder mehrere Prozessstoffe in eine Experimentierkammer geleitet werden, wo die Prozessstoffe untersucht werden. Bei den dabei verwendeten Prozessstoffen handelt es sich üblicherweise um gasförmige oder flüssige Stoffe. Als Prozessstoffe kommen aber auch Pflanzen, Zellkulturen oder kleine Organismen in Frage.

Die Verbindungen der einzelnen Behälter, insbesondere der Experimentierkammer mit den einzelnen die Prozessstoffe bevorratenden Behältern erfolgen üblicherweise mit speziellen Kupplungen, welche allerdings ein Austreten der Prozessstoffe und somit eine Kontamination der Umgebung, insbesondere beim Austausch der Behälter nicht ausreichend verhindern. Ein Nachteil dieser Kupplungen ist, dass im Falle eines Austauschs eines Behälters oder der Experimentierkammer Prozessstoff aus den Verbindungsleitungen austreten kann oder externe Stoffe oder Mikroorganismen eintreten können, was zu einer Kontamination der Umgebung oder des Experiments führt. Somit werden die bekannten Kupplungen üblicherweise als permanente Kupplungen und nicht als Austauschkupplungen verwendetet. Dies hat weiterhin zum Nachteil, dass bei einem laufenden Experiment ein Behälter nur mit erheblichem Aufwand ausgetauscht werden kann.

Bei den bekannten Experimentiervorrichtungen sind weitere Bauteile vorhanden, durch welche der Aufbau bekannter Experimentiervorrichtungen groß und aufwendigen wird. So sind zur Befüllung der Experimentierkammer mit einem ausgewählten Prozessstoff Ventile vorhanden, wobei das Auswählen eines Prozessstoffes mittels Öffnen und Schließen des Ventils erfolgt.

In der nicht vorveröffentlichten DE 103 07 227 A1 werden Vorrichtungen für einen Experimentieraufbau beschrieben, bei welchem Prozessstoffe durch Kanülen in mit Septen verschlossene Experimentierkammern eingebracht werden.

Aus DE 101 49 684 A1 ist eine Vorrichtung nach dem Oberbegriff des Patentanspruchs 1 bekannt.

Aufgabe der Erfindung ist es, eine kompakte Experimentiervorrichtung für Prozessstoffe mit austauschbaren Bevorratungsbehältern unter Beibehaltung der Sterilität zu schaffen.

Diese Aufgabe wird durch die Merkmale des Patentanspruchs 1 gelöst. Vorteilhafte Ausführungen der Erfindung sind Gegenstand von Unteransprüchen.

Gemäß der Erfindung weisen die Experimentierkammern mehrere Öffnungen auf, welche mit Septen verschlossen sind. Jeder Öffnung der Experimentierkammerist eine Kanüle zugeordnet. Erfindungsgemäß sind Mittel vorhanden zur relativen Verschiebung der Experimentierkammer und der Kanülen , wobei weitere Kanülen (KK) zur Durchdringung eines einer Öffnung (OG) eines Bevorratungsbehälters (BA, BB, BC) zugeordneten Septums (ST) vorhanden sind und wobei eine Schnittstelle (S) vorhanden ist zur Herstellung einer Verbindung zwischen den weiteren Kanülen (KK) und den Bevorratungsbehältern (BA, BB, BC) sowie zwischen den Kanülen (KK) und der Experimentierkammer (EK, EK1, EK2), wobei die Schnittstelle (S) einem Behälter (BA, BB, BC) zugeordnete Pumpmiltel (P) mit einer Ein- und Ausgangsseite (ES, AS) zum Pumpen des Prozessstoffes aus dem Behälter (BA, BB, BC) in die Experimentierkammer (EK, EK1, EK2) umfasst. Ein Vorteil der

Erfindung ist, dass somit durch Verschieben einer Baugruppe, z.B. der Experimentierkammer bezüglich der Kanüle oder umgekehrt eine temporäre oder permanente Verbindung zwischen Innenraum der Experimentierkammer und dem offenen Ende einer Kanüle hergestellt werden kann. Je nach Bedarf ist es somit möglich, mittels Verschiebung einer Baugruppe den Zustrom eines Prozessstoffes zu ermöglichen oder zu unterbinden.
Ein Septum dient dabei der Abdichtung der jeweiligen Öffnung der Experimentierkammer. Jedem Septum und somit jeder Öffnung der Experimentierkammer ist dabei erfindungsgemäß eine Kanüle zugeordnet. Durch relative Verschiebung der Experimentierkammer bezüglich der Kanülen werden die offenen Enden Kanülen in die Septen eingebracht. Bei entsprechender Verschiebung ist es möglich, dass das offene Ende einer Kanüle ein Septum vollständig durchdringt und somit in direktem Kontakt zum Innenraum der Experimentierkammer steht. In diesem Fall ist es möglich, einen Prozessstoff aus einem an die Kanüle angeschlossenen Behälter in die Experimentierkammer zu leiten. Wird die Kanüle anschließend aus der Experimentierkammer herausgezogen, verschließt das Septum die Experimentierkammer wieder.

Erfindungsgemäß sind die Bevorratungsbehälter für die Prozessstoffe ebenfalls mit Septen verschlossen und weiteren Kanülen zugeordnet. Damit ist es möglich, dass die Bevorratungsbehälter einfach ausgetauscht werden können, ohne dass es zu einem Ausströmen etwaig vorhandener Restflüssigkeit oder Restgase aus dem Behälter kommt.

Die Experimentierkammer weist vorteilhaft eine weitere Öffnung zur Aufnahme eines Dichtungskörpers auf. Dieser Dichtungskörper dient dabei in einer ersten Position der Belüftung der Experimentierkammer und dichtet in einer zweiten Position die Experimentierkammer ab. Die Experimentierkammer weist vorteilhaft Mittel zur Entlüftung auf.

Gemäß der Erfindung ist eine Schnittstelle vorhanden, welche eine Verbindung, insbesondere eine lösbare Verbindung, zwischen einerseits den Kanülen und der Experimentierkammer und anderseits zwischen den Kanülen und den Bevorratungsbehältern herstellt. In einer vorteilhaften Ausführung der Erfindung sind die Verbindungen zwischen den Kanülen und der Schnittstelle als Schlauchverbindung ausgeführt. Ein Vorteil hierbei ist, dass die Experimentierkammer und/oder die Bevorratungsbehälter dezentral angeordnet werden können.

Die erfindungsgemäße Experimentiervorrichtung weist eine Haltevorrichtung zur lösbaren Aufnahme der Experimentierkammer, der Bevorratungsbehälter und der Kanülen auf. Vorteilhaft sind Mittel zur Herstellung einer Vorspannung zwischen der Experimentierkammer und der Haltevorrichtung vorhanden. Diese Mittel sind z.B. Federn.

Eine vorteilhafte Ausführung der Erfindung ist, dass das Mittel zur relativen Verschiebung der Experimentierkammer bezüglich der Kanülen eine in der Experimentierkammer ausgeführte Gewindebohrung und einen, an der Schnittstelle zur Aufnahme in die Gewindebohrung vorgesehenen Gewindestift umfasst. Mit dieser Anordnung ist in einfacher Weise eine relative Verschiebung der Experimentierkammer bezüglich der Kanülen möglich. Zweckmäßig wird der Gewindestift dabei von einem Motor angetrieben. Hierbei ist es selbstverständlich möglich, dass die relative Verschiebung bidirektional erfolgen kann.

Der Transport der Prozessstoffe aus den Bevorratungsbehältern in die Experimentierkammer erfolgt erfindungsgemäß mittels Pumpmitteln. Dabei ist in der Schnittstelie eine Pumpe, insbesondere eine Rollerpumpe, vorhanden. Ein Vorteil hierbei ist, dass die Rollerpumpe als Ventil dient und der Transport der Prozessstoffe in die Experimentierkammer drucklos erfolgt.
Es ist aber auch möglich, mittels druckbeaufschlagter Bevorratungsbehälter ein Strömen der Prozessstoffe aus den Behältern in die Experimentierkammer zu erreichen. Selbstverständlich ist es auch möglich, in der Experimentierkammer einen Unterdruck zu erzeugen, wodurch Prozessstoff aus den Behältern in die Experimentierkammer gesogen wird.

Die Erfindung sowie weitere vorteilhafte Ausführungen der Erfindung werden im weiteren anhand von Zeichnung näher erläutert. Es zeigen:
- Fig. 1: einen beispielhaften Aufbau der Vorrichtung, die nicht unter Anspruch 1 fällt.
- Fig. 2: in schematischer Darstellung eine erste beispielhafte Ausführungsform der erfindungsgemäßen Vorrichtung in einem ersten Betriebszustand 0,
- Fig. 3: in schematischer Darstellung die Ausführungsform gemäß Fig. 2 in einem zweiten Betriebszustand A,
- Fig. 4: in schematischer Darstellung die Ausführungsform gemäß Fig. 2 und 3 in einem dritten Betriebszustand B,
- Fig. 5: eine Detailansicht der Betriebszustände 0, A, B aus Fig. 2-4,
- Fig. 6: in schematischer Darstellung eine zweite beispielhafte Ausführungsform der erfindungsgemäßen Vorrichtung,
- Fig. 7: in schematischer Darstellung eine dritte beispielhafte Ausführungsform der erfindungsgemäßen Vorrichtung.

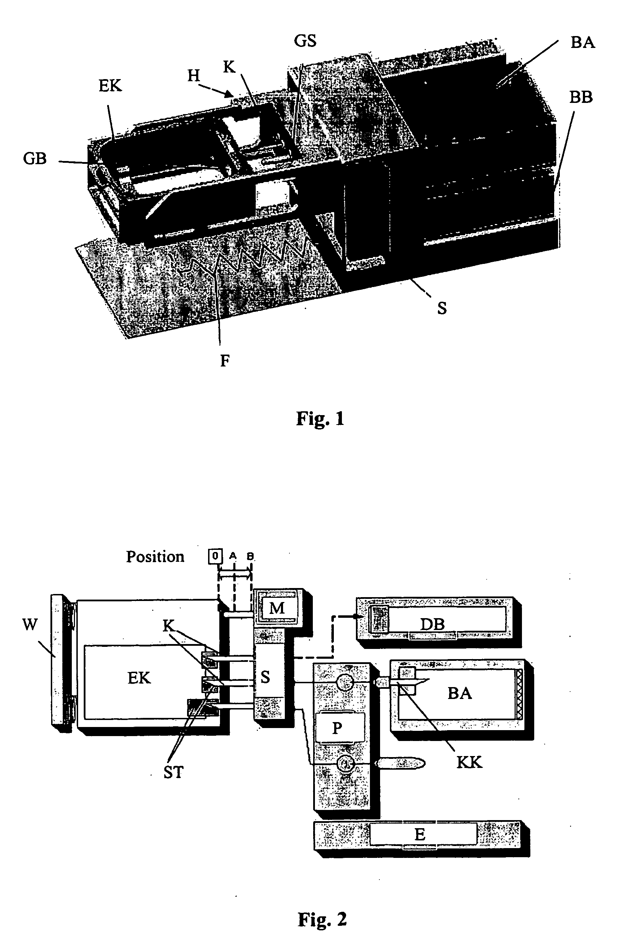

In Fig.1 ist ein beispielhafter Aufbau der Vorrichtung dargestellt, die nicht unter Anspruch 1 fällt. An die Schnittstelle S sind die Bevorratungsbehälter BA, BB für die entsprechenden Prozessstoffe angeschlossen. Die Behälter BA, BB werden dabei von nicht dargestellten Halterungen an der Schnittstelle S fixiert. Erfindungsgemäß ist in einer mit der Schnittstelle S verbundenen Haltevorrichtung H die Experimentierkammer EK befestigt. Die Experimentierkammer EK weist auf der der Schnittstelle S zugewandten Seite eine Gewindebohrung GB auf. An der Schnittstelle S ist ein der Gewindebohrung GB gegenüberliegender mit der Gewindebohrung GB fluchtender Gewindestift GS angebracht. Dieser Gewindestift GB ist zweckmäßig mit einer nicht dargestellten Getriebe-/Motoreinheit verbunden.
Zur Herstellung einer Vorspannung zwischen der Experimentierkammer EK und der Schnittstelle S ist eine Feder F vorhanden. Diese Feder F ist einerseits an der Experimentierkammer EK und andererseits an der Schnittstelle S befestigt. Mit der Feder F wird eine Vorspannung erzeugt, wodurch z.B. beim Austausch der Experimentierkammer EK die Gewindebohrung GB zuverlässig auf den Gewindestift GS aufgesetzt werden kann. Dadurch ist es möglich, dass ohne weiteres Eingreifen von außen eine relative Verschiebung der Experimentierkammer EK durch Betrieb des Gewindestifts GS erreicht werden kann.

An der Schnittstelle S sind zweckmäßig parallel zu dem Gewindestift GS Kanülen K fluchtend mit in der Experimentierkammer EK ausgeführten und mit Septen verschlossenen Öffnungen (nicht dargestellt) angeordnet.

In Fig. 2 ist schematisch eine erste beispielhafte Ausführungsform der erfindungsgemäßen Vorrichtung in einem ersten Betriebszustand 0 gezeigt. Diese Darstellung zeigt die Startkonfiguration eines Experiments. Eine Experimentierkammer EK ist in die entsprechende Halterung (nicht dargestellt) eingebracht. Mittels einer Feder F, welche zwischen der Experimentierkammer EK und einer festen Wand W angeordnet ist, ist die Gewindebohrung (nicht dargestellt) der Experimentierkammer EK auf dem Gewindestift GS der Schnittstelle S fixiert. Zum Antrieb des Gewindestifts GS ist dieser mit einer Getriebe-/Motoreinheit M verbunden.
Die Experimentierkammer EK weist mehrere Öffnungen (nicht dargestellt) auf, welche mit Septen ST verschlossen sind. Die offenen Enden der Kanülen K befinden sich in dieser Konfiguration innerhalb der Septen ST. Dies wird im Wesentlichen dadurch erreicht, dass durch die eine Vorspannung ausübende Feder F die Kanülen K in die Septen ST hinein gedrückt werden oder die Experimentierkammer EK durch den motorangetriebenen Gewindestift GS in diese Position gebracht wird.

Die einzelnen Kanülen K sind über eine Pumpanordnung P jeweils mit einer weiteren Kanüle KK verbunden. Die Pumpanordnung P kann zweckmäßig mit einer Elektronik E zu Ansteuerung der Pumpen verbunden sein. Diese weiteren Kanülen KK sind den Bevorratungsbehältern für die Prozessstoffe zugeordnet. In Fig. 2 sind beispielhaft zwei weiteren Kanülen KK für zwei Bevorratungsbehälter, wobei beispielhaft nur ein Bevorratungsbehälter BA dargestellt ist, gezeigt.
Der Bevorratungsbehälter BA weist eine Öffnung (nicht dargestellt) auf, welche mit einem Septum ST verschlossen ist. Der Bevorratungsbehälter BA ist dabei erfindungsgemäß derart in die Halterung (nicht dargestellt) der Schnittstelle S eingebracht, dass die weitere Kanüle KK das Septum ST vollständig durchdringt, wodurch sich das offene Ende der weiteren Kanüle KK im Innern des Behälters BA befindet.

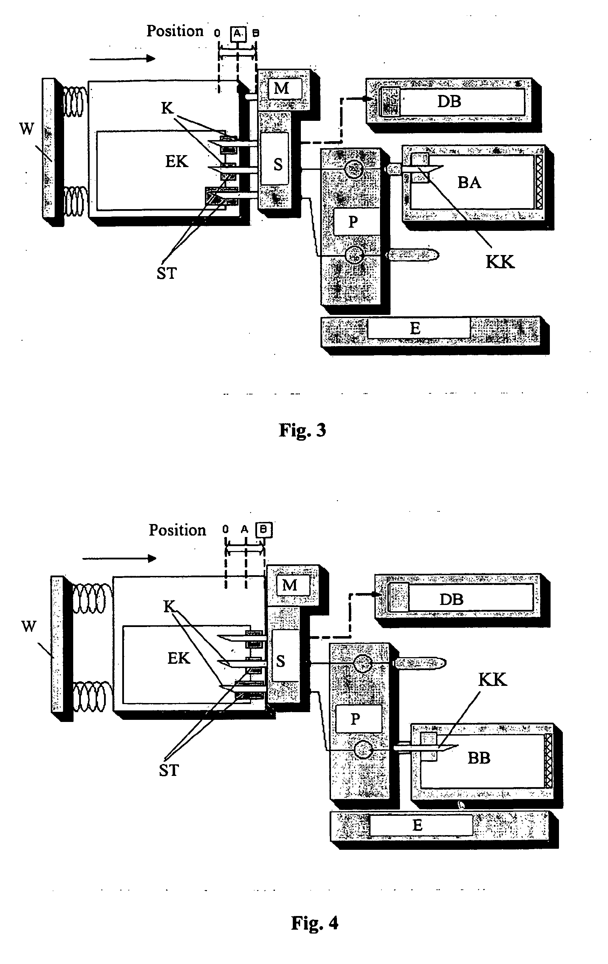

Fig. 3 zeigt die beispielhafte Anordnung in einem zweiten Betriebszustand A. Hierbei wurde durch Antrieb des Gewindestifts GS die Experimentierkammer EK relativ zu den Kanülen K verschoben. Im dargestellten Fall wurde die Experimentierkammer EK in Pfeilrichtung verschoben. Es ist zu erkennen, dass ein erster Teil der Kanülen K (die beiden oberen) die Septen ST vollständig durchdrungen haben. In der dargestellten Anordnung ist die mittlere Kanüle K über der Pumpenanordnung P mit dem Vorratsbehälter BA verbunden. Mittels Ansteuerung der entsprechenden Pumpe, z.B. über die angeschlossene Elektronik E, wird Prozessstoff aus dem Behälter BA in die Experimentierkammer EK transportiert.
Die obere Kanüle K ist mit einem Volumenausgleichsbehälter DB verbunden. Dieser Volumenausgleichsbehälter DB dient dazu, bei Verwendung einer Experimentierkammer EK mit starrer Wandung den sich in der Experimentierkammer EK durch das Befüllen aufbauenden Druck zu kompensieren. Selbstverständlich kann der sich durch das Befüllen der Experimentierkammer EK aufbauende Druck auch dadurch kompensiert werden, dass für die Experimentierkammer EK eine flexible Wandung vorgesehen wird. Der Volumenausgleichsbehälter DB kann somit entfallen.

In Fig. 4 wird ein dritter Betriebszustand B der beispielhaften Anordnung aus Fig. 2 und 3 gezeigt. Im dargestellten Zustand wurde die Experimentierkammer EK in Pfeilrichtung verschoben, so dass neben den beiden oberen Kanülen K auch die untere Kanüle K vollständig die Septen ST durchdringt. Die untere Kanüle K ist dabei über eine Pumpenanordnung P mit einem Bevorratungsbehälter BB für einen Prozessstoff verbunden. Mittels Ansteuerung der entsprechenden Pumpe kann Prozessstoff aus dem Bevorratungsbehälter BB in die Experimentierkammer EK geleitet werden.

Nach Beendigung des Experiments wird die Experimentierkammer EK mittels entsprechender Drehung des Gewindestifts GS entgegen der gezeigten Pfeilrichtung bewegt. Insbesondere wird die Experimentierkammer EK nach Beendigung eines Experiments in den Betriebszustand 0 (vgl. Fig. 2) gebracht. In diesem Zustand können die Experimentierkammer EK sowie die Bevorratungsbehälter BA, BB ausgetauscht werden. Ein Vorteil hierbei ist, dass aufgrund der Septen ST kein Ausströmen von Prozessstoff aus der Experimentierkammer EK bzw. aus den Bevorratungsbehältern BA, BB und kein Eindringen einer externen Kontamination möglich ist.
Die zweckmäßig als Rollerpumpen ausgebildeten Pumpen in der Pumpenanordnung P haben den Vorteil, dass sie im ausgeschalteten Zustand, d.h. die Pumpe arbeitet nicht, als Abschlußventil benutzt werden können. Das bedeutet, dass auch bei einer Druckdifferenz zwischen Ein- und Ausgangsseite der Pumpe kein Prozessstoff durch die Pumpe strömen kann. Somit kann beim Austausch der Bevorratungsbehälter BA, BB oder Experimentierkammer EK kein Prozessstoff aus den Kanülen K oder weiteren Kanülen KK austreten.

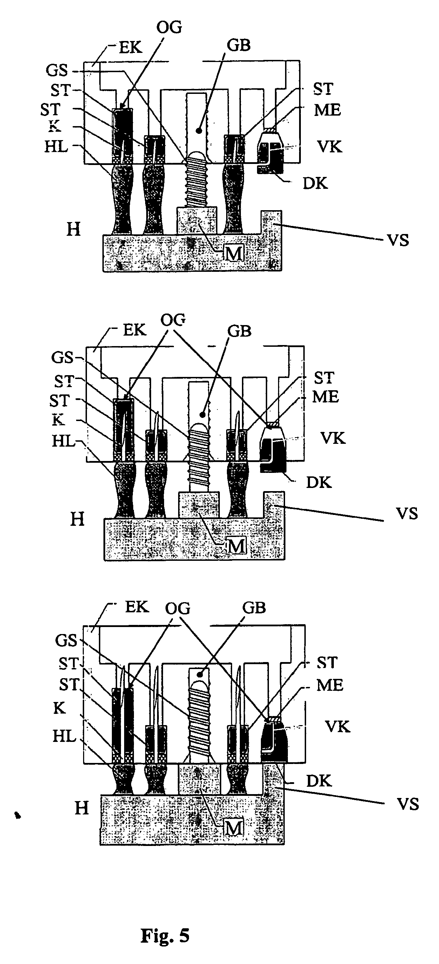

In Fig. 5 sind die einzelnen Betriebszustände der Fig. 2-4 detailliert gezeigt. Die obere Darstellung zeigt den Betriebszustand 0. Dieser Betriebszustand ist der Startzustand zu Beginn eines Experiments oder nach Beendigung des Experiments derjenige Zustand in den die Anordnung gebracht wird, um die Experimentierkammer EK oder die Bevorratungsbehälter (nicht dargestellt) auszutauschen.
Die Darstellung zeigt eine an der Schnittstelle (nicht dargestellt) angebrachte Haltevorrichtung H. An dieser Haltevorrichtung H sind lösbar die Kanülen K angebracht, welche mit Hülsen HL ummantelt sind. Außerdem ist an der Haltevorrichtung H ein Getriebe-/Motoreinheit M angebracht, welche mit einem Gewindestift GS verbunden ist.

Der Haltevorrichtung H gegenüber ist die Experimentierkammer EK angeordnet, welche derart ausgerichtet ist, dass eine in der Experimentierkammer EK ausgeführte

Gewindebohrung GB dem Gewindestift GS fluchtend gegenüberliegt. Außerdem sind in der Experimentierkammer EK beispielhaft vier Öffnungen OG ausgeführt. Die Öffnungen OG sind mit Septen ST verschlossen. Beispielhaft ist die linke Öffnung OG mit einem lange Septum ST und die zweite Öffnung OG von links und die zweite Öffnung OG von rechts mit einem kurzen Septum ST verschlossen. Die offenen Enden der Kanülen KK enden jeweils innerhalb der Septen ST, d.h. in diesem Betriebszustand kann kein Prozessstoff aus den Kanülen KK in die Experimentierkammer EK geleitet werden.
In die rechte Öffnung OG ist ein Dichtungskörper DK eingebracht. Der Dichtungskörper DK weist einen Kanal VK auf, welcher von der in der Öffnung OG liegenden Stirnfläche zu einer Seitenfläche verläuft. Der Dichtungskörper DK ist dabei derart in die Öffnung OG eingebracht, dass durch den Kanal VK eine Belüftung der Experimentierkammer EK möglich ist. Zwischen dem Innenraum der Experimentierkammer EK und dem Dichtungskörper DK kann eine Membran ME angeordnet sein.

Die mittlere Darstellung zeigt den Betriebszustand A, bei dem die Experimentierkammer durch entsprechende Drehung des Gewindestiftes GS in Pfeilrichtung verschoben wurde. Selbstverständlich ist auch ein Verschieben der Haltevorrichtung H gegenüber einer festsitzenden Experimentierkammer EK möglich.
In dieser Darstellung sind das mittlere und das rechte Septum ST von den Kanülen K vollständig durchdrungen worden, so dass die offenen Enden der Kanülen K in der Experimentierkammer EK enden, wodurch ein Einleiten von Prozessstoff möglich ist.

Die untere Darstellung zeigt den Betriebszustand B. Bei diesem Betriebszustand B sind alle Septen ST von den jeweiligen Kanülen K vollständig durchdrungen. Die Darstellung zeigt ferner eine an der Halterung H angeordnete Stufe VS. Diese Stufe VS ist dem Dichtungskörper DK fluchtend gegenüber angeordnet. In dem Betriebszustand B schiebt die Stufe VS den Dichtungskörper DK derart in die Öffnung OG der Experimentierkammer EK, dass der Kanal VK in der Öffnung OG endet und somit keine Belüftung der Experimentierkammer EK möglich ist. Es ist aber auch möglich, die Stufe VS durch ein ansteuerbares Gewinde zu ersetzen, so dass unabhängig von der relativen Position der Experimentierkammer EK zu der Haltevorrichtung H der Dichtungskörper DK zur Belüftung in der Öffnung OG verschoben werden kann.

Mit dem Bezugszeichen HL sind die Abdeckungen der Kanülen K bezeichnet. Diese Abdeckungen dienen dazu, die Kanüle K beim Eindringen in die Septen ST freizugeben und beim Herausziehen der Kanülen K aus den Septen ST zu verschließen.

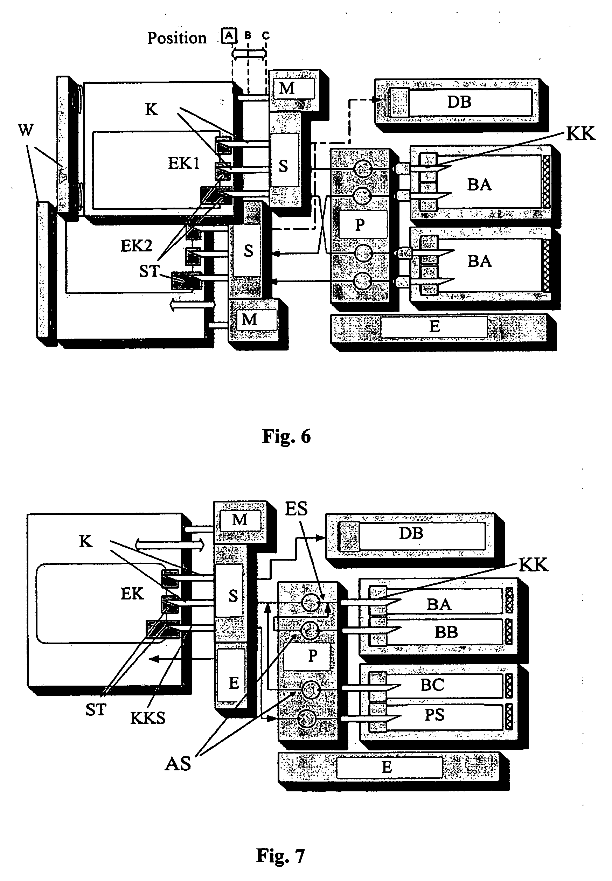

In Fig. 6 ist eine beispielhafte zweite Ausführungsform der Erfindung dargestellt. In dieser Ausführungsform ist eine zweite Experimentierkammer EK2 vorhanden. Diese zweite Experimentierkammer EK2 ist über eine eigene Haltevorrichtung H an die mit der ersten Experimentierkammer EK1 gemeinsame Pumpanordnung P und darüber an die gemeinsamen Behälter BA, BB angeschlossen. Im Gegensatz zu der ersten Ausführungsform sind bei dieser Ausführungsform für jeden Behälter BA, BB zwei Kanülen KK vorgesehen. Eine Kanüle KK versorgt ausschließlich die eine Experimentierkammer EK, die andere Kanüle KK versorgt ausschließlich die andere Experimentierkammer EK2.
Mit dieser Ausführungsform ist es somit möglich gleichzeitig gleiche, oder auch verschiedene Experimente durchzuführen. Selbstverständlich können beliebig viele Experimentierkammern EK1, EK2 vorgesehen werden.

Eine dritte beispielhafte Ausführungsform ist in Fig. 7 gezeigt. Hierbei ist die Ausgangsseite AS der Pumpe P, welcher dem Behälter BB zugeordnet ist, mit der Eingangsseite ES der dem Behälter BA zugeordneten Pumpe P verbunden. Somit kann der Prozessstoff aus Behälter BB z.B. in die weiteren Kanüle KK des Behälter BA und von dort aus in die Experimentierkammer EK gepumpt werden.
Andererseits können die Ausgangsseiten AS zweier verschiedenen Behältern BA, BC zugeordneten Pumpen P miteinander verbunden sein und einer gemeinsamen weiteren Kanüle KK zugeführt sein.
Des Weiteren kann eine weitere Kanüle KKS an die Haltevorrichtung H der Schnittstelle S angebracht sein. Mittels dieser Kanüle KKS kann bei entsprechender relativer Position der Experimentierkammer EK zu der Haltevorrichtung H über eine angeschlossene Pumpe P eine Probe aus der Experimentierkammer EK gezogen werden. Diese Probe wird in ein, entsprechend der Behälter BA, BB, BC angeschlossenes Probengefäß PS gepumpt.
Selbstverständlich ist es möglich die in Fig. 7 dargestellte Ausführungsform auch mit mehreren Experimentierkammern EK zu betreiben.

## Patentansprüche

1. Vorrichtung zur Durchführung von Experimenten an Prozessstoffen umfassend ein oder mehrere Behälter (BA, BB, BC) zur Bevorratung von Prozessstoffen und eine oder mehrere Experimentierkammern (EK, EK1, EK2) zur Aufnahme der Prozessstoffe, wobei die Experimentierkammern (EK, EK1, EK2) mehrere Öffnungen (OG) aufweisen, welche mit Septen (ST) verschlossen sind,
**dadurch gekennzeichnet, dass** je ein Septum (ST) pro Öffnung (OG) der Experimentierkammer (EK, EK1, EK2) und je eine Kanüle (K) pro Septum (ST) vorhanden ist,
dass Mittel (M, GB, GS) vorhanden sind zur relativen Verschiebung der Experimentierkammer (EK, EK1, EK2) und der Kanülen (K) und
daß weitere Kanülen (KK) zur Durchdringung eines einer Öffnung (OG) eines Bevorratungsbehälters (BA, BB, BC) zugeordneten Septums (ST) vorhanden sind und
dass ein Pumpmittel (P) mit einer Ein- und Ausgangsseite (ES, AS) zum Pumpen des Prozessstoffes aus dem Bevorratungsbehälter (BA, BB, BC) in die Experimentierkammer (EK, EK1, EK2) vorhanden ist und
dass die weiteren Kanülen (KK) mit dem Pumpmittel (P) verbunden sind und dass eine Schnittstelle (S) vorhanden ist zur Herstellung einer Verbindung zwischen den weiteren Kanülen (KK) und den Bevorratungsbehältern (BA, BB, BC) sowie zwischen den Kanülen (K) und der Experimentierkammer (EK, EK1, EK2), wobei die Schnittstelle (S) die Pumpmittel (P) umfasst und
dass eine Halterung der Schnittstelle (S) vorhanden ist, in welche die Bevorratungsbehälter (BA, BB, BC) derart eingebracht sind, dass die weiteren Kanülen (KK) das Septum (ST) vollständig durchdringen, wodurch sich das offene Ende der weiteren Kanülen (KK) im Innern des Bevorratungsbehälters (BA, BB, BC) befinden
und dass die Experimentierkammer (EK, EK1, EK2) in einer mit der Schnittstelle (S) verbundenen Haltevorrichtung (H) befestigt ist.

2. Vorrichtung nach Anspruch 1, **dadurch gekennzeichnet, dass** die Verbindung zwischen der Schnittstelle (S) und den Kanülen (K) und den weiteren Kanülen (KK) als lösbare Schlauchverbindung ausgeführt ist.

3. Vorrichtung nach Anspruch 1 oder 2, **dadurch gekennzeichnet, dass** die Experimentierkammer (EK, EK1, EK2) eine weitere Öffnung (OG) aufweist, welcher ein Dichtungskörper (DK) zugeordnet ist, welcher einen von der dem Innenraum der Experimentierkammer (EK, EK1, EK2) zugewandten Stirnfläche des Dichtungskörpers (DK) zu einer Seitenfläche des Dichtungskörpers (DK) verlaufenden Kanal (VK) aufweist.

4. Vorrichtung nach Anspruch 3, **dadurch gekennzeichnet, dass** die Schnittstelle (S) dem Dichtungskörper (DK) gegenüberliegende Mittel (VS) zur Verschiebung des Dichtungskörpers (DK) aufweist.

5. Vorrichtung nach einem der Ansprüche 2-4, **dadurch gekennzeichnet, dass** das Mittel (M, GB, GS) zur relativen Verschiebung der Septen (ST) bezüglich der Kanüle (K) eine in der Experimentierkammer (EK, EK1, EK2) ausgeführte Gewindebohrung (GB) und ein, an der Schnittstelle (S) zur Aufnahme in die Gewindebohrung (GB) vorgesehenen Gewindestift (GS) umfasst.

6. Vorrichtung nach Anspruch 5, **dadurch gekennzeichnet, dass** Mittel (M) zum Antrieb des Gewindestifts (GS) vorhanden sind.

7. Vorrichtung nach einem der vorangehenden Ansprüche, **dadurch gekennzeichnet, dass** Mittel (F) zur Herstellung einer Vorspannung zwischen der Experimentierkammer (EK, EK1, EK2) und der Schnittstelle (S) vorhanden sind.

8. Vorrichtung nach einem der vorangehenden Ansprüche, **dadurch gekennzeichnet, dass** die Kanülen (K) derart angeordnet sind, dass sich bei einer ersten vorgebbaren Position 0 das offene Ende aller Kanülen (K) im Inneren der jeweiligen Septen (ST) befindet, dass bei einer zweiten vorgebbaren Position A für einen ersten Teil der Kanülen (K) sich das offene Ende der Kanüle (K) im Inneren der jeweiligen Septen (ST) befindet und für einen zweiten Teil der Kanülen (K) die jeweiligen Septen (ST) von den offenen Enden der Kanülen (K) vollständig durchdrungen sind und dass bei einer dritten vorgebbaren Position B alle Septen (ST) von den offenen Enden der Kanülen (K) vollständig durchdrungen sind.

9. Vorrichtung nach einem der vorangehenden Ansprüche, **dadurch gekennzeichnet, dass** die Ausgangsseite (AS) eines Pumpmittels (P) mit mindestens einer weiteren Kanüle (KK) verbunden ist.

10. Vorrichtung nach einem der vorangehenden Ansprüche , **dadurch gekennzeichnet, dass** die Ausgangsseiten (AS) zweier Pumpmittel (P) mit einer gemeinsamen weiteren Kanüle (KK) verbunden sind.

11. Vorrichtung nach Anspruch 10, **dadurch gekennzeichnet, dass** die Ausgangsseite (AS) eines ersten Pumpmittels (P) mit der Eingangsseite (ES) eines zweiten Pumpmittels (P) verbunden ist.

12. Vorrichtung nach einem der vorangehenden Ansprüche, **dadurch gekennzeichnet, dass** Mittel - zur Entlüftung der Experimentierkammer (EK, EK1, EK2) vorhanden sind.

13. Vorrichtung nach einem der vorangehenden Ansprüche, **dadurch gekennzeichnet, dass** Abdeckungen (HL) für die Kanülen (K) vorhanden sind.

## Claims

1. Device for carrying out experiments on process substances, comprising one or more containers (BA, BB, BC) for storing process substances, and one or more experimentation chambers (EK, EK1, EK2) for holding the process substances, the experimentation chambers (EK, EK1, EK2) having a plurality of openings (OG) which are closed with septums (ST), **characterized in that** one septum (ST) each is present per opening (OG) of the experimentation chamber (EK, EK1, EK2), and one cannula (K) each is present per septum (ST),
**in that** means (M, GB, GS) are present for the relative displacement of the experimentation chamber (EK, EK1, EK2) and of the cannulas (K), and
**in that** further cannulas (KK) are present for penetrating a septum (ST) assigned to an opening (OG) of a storage container (BA, BB, BC), and
**in that** a pump means (P) with an input and output side (ES, AS) is present for pumping the process substance from the storage container (BA, BB, BC) into the experimentation chamber (EK, EK1, EK2), and
**in that** the further cannulas (KK) are connected to the pump means (P), and **in that** an interface (S) is present for producing a connection between the further cannulas (KK) and the storage containers (BA, BB, BC) as well as between the cannulas (K) and the experimentation chamber (EK, EK1, EK2), the interface (S) comprising the pump means (P), and
**in that** there is present a holder of the interface (S) into which the storage containers (BA, BB, BC) are introduced in such a way that the further cannulas (KK) completely penetrate the septum (ST), as a result of which the open end of the further cannulas (KK) is located in the interior of the storage container (BA, BB, BC) and **in that** the experimentation chamber (EK, EK1, EK2) is fastened in a holding device (H) connected to the interface (S).

2. Device according to Claim 1, **characterized in that** the connection between the interface (S) and the cannulas (K) and the further cannulas (KK) is designed as a detachable hose connection.

3. Device according to Claim 1 or 2, **characterized in that** the experimentation chamber (EK, EK1, EK2) has a further opening (OG), which is assigned a sealing body (DK) which has a channel (VK) running from the end face, facing the interior of the experimentation chamber (EK, EK1, EK2), of the sealing body (DK) to a side face of the sealing body (DK).

4. Device according to Claim 3, **characterized in that** the interface (S) has means (VS) which are opposite the sealing body (DK) and are intended for displacing the sealing body (DK).

5. Device according to one of Claims 2-4, **characterized in that** the means (M, GB, GS) for relative displacement of the septums (ST) with reference to the cannula (K) comprises a threaded hole (GB) executed in the experimentation chamber (EK, EK1, EK2), and a threaded pin (GS) provided at the interface (S) in order to be held in the threaded hole (GB).

6. Device according to Claim 5, **characterized in that** means (M) are present for driving the threaded pin (GS).

7. Device according to one of the preceding claims, **characterized in that** means (F) are provided for producing a prestress between the experimentation chamber (EK, EK1, EK2) and the interface (S).

8. Device according to one of the preceding claims, **characterized in that** the cannulas (K) are arranged in such a way that in a first prescribable position 0 the open end of all the cannulas (K) is located in the interior of the respective septums (ST), that in a second prescribable position A the open end of the cannula (K) is located in the interior of the respective septums (ST) for a first fraction of the cannulas (K), and the respective septums (ST) are completely penetrated by the open ends of the cannulas (K) for a second fraction of the cannulas (K), and that in a third prescribable position B all the septums (ST) are completely penetrated by the open ends of the cannulas (K).

9. Device according to one of the preceding claims, **characterized in that** the output side (AS) of a pump means (P) is connected to at least one further cannula (KK).

10. Device according to one of the preceding claims, **characterized in that** the output sides (AS) of two pump means (P) are connected to a common further cannula (KK).

11. Device according to Claim 10, **characterized in that** the output side (AS) of a first pump means (P) is connected to the input side (ES) of a second pump means (P).

12. Device according to one of the preceding claims, **characterized in that** means are provided for ventilating the experimentation chamber (EK, EK1, EK2).

13. Device according to one of the preceding claims, **characterized in that** covers (HL) are provided for the cannulas (K).

## Revendications

1. Dispositif en vue d'exécuter des expériences sur des substances de traitement, comprenant un ou plusieurs récipients (BA, BB, BC) de réserve de substances de traitement et une ou plusieurs chambres d'expérimentation (EK, EK1, EK2) qui reprennent les substances de traitement, les chambres d'expérimentation (EK, EK1, EK2) présentant plusieurs ouvertures (OG) raccordées à des septums (ST),
**caractérisé**
**en ce qu'**il présente un septum (ST) par ouverture (OG) de chambre d'expérimentation (EK, EK1, EK2) et une canule (K) par septum (ST),
**en ce qu'**il présente des moyens (M, GB, GS) permettant le déplacement relatif de la chambre d'expérimentation (EK, EK1, EK2) et des canules (K) et
**en ce qu'**il présente d'autres canules (KK) destinées à traverser un septum (ST) associé à une ouverture (OG) d'un récipient de réserve (BA, BB, BC),
**en ce qu'**il présente un moyen de pompe (P) doté d'un côté d'entrée et d'un côté de sortie (ES, AS) et qui pompe la substance de traitement depuis le récipient de réserve (BA, BB, BC) jusque dans la chambre d'expérimentation (EK, EK1, EK2),
**en ce que** les autres canules (KK) sont reliées au moyen de pompe (P),
**en ce qu'**une interface (S) est prévue pour établir une liaison entre les autres canules (KK) et les récipients de réserve (BA, BB, BC) ainsi qu'entre les canules (K) et la chambre d'expérimentation (EK, EK1, EK2), l'interface (S) comprenant le moyen de pompe (P),
**en ce qu'**il présente pour l'interface (S) un support dans lequel les récipients de réserve (BA, BB, BC) sont placés de telle sorte que les autres canules (KK) traversent complètement le septum (ST) de telle sorte que l'extrémité ouverte des autres canules (KK) soit située à l'intérieur du récipient de réserve (BA, BB, BC) et
**en ce que** la chambre d'expérimentation (EK, EK1, EK2) est fixée dans un dispositif de soutien (H) relié à l'interface (S).

2. Dispositif selon la revendication 1, **caractérisé en ce que** la liaison entre l'interface (S), les canules (K) et les autres canules (KK) est réalisée sous la forme de liaisons libérables par tuyau flexible.

3. Dispositif selon la revendication 1 ou 2, **caractérisé en ce que** la chambre d'expérimentation (EK, EK1, EK2) présente une autre ouverture (OG) à laquelle est associé un corps d'étanchéité (DK) qui présente un canal (VK) qui s'étend entre la surface frontale du corps d'étanchéité (DK) tournée vers l'espace intérieur de la chambre d'expérimentation (EK, EK1, EK2) et une surface latérale du corps d'étanchéité (DK).

4. Dispositif selon la revendication 3, **caractérisé en ce que** l'interface (S) présente des moyens (VS) situés face au corps d'étanchéité (DK) pour déplacer le corps d'étanchéité (DK).

5. Dispositif selon l'une des revendications 2 à 4, **caractérisé en ce que** le moyen (M, GB, GS) de déplacement relatif des septums (ST) par rapport à la canule (K) comporte un alésage fileté (GB) ménagé dans la chambre d'expérimentation (EK, EK1, EK2) et une tige filetée (GS) prévue sur l'interface (S) pour être reprise dans l'alésage fileté (GB).

6. Dispositif selon la revendication 5, **caractérisé en ce qu'**il présente des moyens (M) d'entraînement de la tige filetée (GS).

7. Dispositif selon l'une des revendications précédentes, **caractérisé en ce qu'**il présente des moyens (F) qui établissent une précontrainte entre la chambre d'expérimentation (EK, EK1, EK2) et l'interface (S).

8. Dispositif selon l'une des revendications précédentes, **caractérisé en ce que** les canules (K) sont disposées de telle sorte que dans une première position prédéterminée 0, l'ouverture ouverte de toutes les canules (K) est située à l'intérieur de chaque septum (ST), **en ce que** dans une deuxième position prédéterminée A, pour une première partie des canules (K), l'extrémité ouverte de la canule (K) est située à l'intérieur du septum (ST) concerné et pour une deuxième partie des canules (K), les septums (ST) concernés sont traversés complètement par l'extrémité ouverte des canules (K) et **en ce que** dans une troisième position prédéterminée B, tous les septums (ST) sont complètement traversés par l'extrémité ouverte des canules (K).

9. Dispositif selon l'une des revendications précédentes, **caractérisé en ce que** le côté de sortie (AS) d'un moyen de pompe (P) est relié à au moins l'une des autres canules (KK).

10. Dispositif selon l'une des revendications précédentes, **caractérisé en ce que** le côté de sortie (AS) de deux moyens de pompe (P) est relié à une autre canule (KK) commune.

11. Dispositif selon la revendication 10, **caractérisé en ce que** le côté de sortie (AS) d'un premier moyen de pompe (P) est relié au côté d'entrée (ES) d'un deuxième moyen de pompe (P).

12. Dispositif selon l'une des revendications précédentes, **caractérisé en ce qu'**il présente des moyens de dégazage de la chambre d'expérimentation (EK, EK1, EK2).

13. Dispositif selon l'une des revendications précédentes, **caractérisé en ce qu'**il présente des couvercles (HL) pour les canules (K).
